# EUROPEAN PATENT APPLICATION

(11) **EP 1 286 519 A1**
(43) Date of publication of application: **26.02.2003**
(21) Application number: 02250130.8
(22) Date of filing: 09.01.2002
(51) Int. Cl.: H04L 29/06, G06F 1/00, G07C 9/00, G06K 19/00

(54) **System, device, guard manager and method for intrusion management of guarded areas**

(30) Priority: 23.08.2001 JP 2001253457
(71) Applicant: Allied Telesis K. K., Shinagawa-ku, Tokyo 141-8635 (JP)
(72) Inventor: Sato, Kazuhiko, c/o Allied Telesis Kabushiki K., Tokyo 141-8635 (JP)
(74) Representative: Faulkner, Thomas John

(57) **Abstract**

A management system (1) including a network (100) and a managed area further includes a managed device (50), which is located in the managed area, connectible to the network, and assigned network information that enables communications of the managed device in the network, a guard manager (60) adapted to guard the managed area against an intrusion, and a management device (10) that uses the network information of the managed device to manage the managed device and the guard manager.

## Description

The present invention relates generally to management systems that manage admittance to a predetermined area. The present invention is suitable, for example, in creating a highly secured computer network, such as a LAN (Local Area Network), in an apartment house, building, etc. as well as in managing admittance to an apartment and a certain room in the apartment, building etc.

Along with the recent increased number of Internet users, some attractive apartment houses have readily provided their tenants and residents ("residents" hereinafter) with the Internet environment. This apartment house enables the resident to access the Internet when he/she connects his/her network device, such as a personal computer ("PC"), to a network, such as a LAN, built in the apartment house (or to its subnet through an interconnecting device, such as a hub, a switch, and a router). This Internet environment usually uses a management device (also called "manager" or "server") to monitor connection statuses and traffics of residents' network devices for the centralized management to the network.

However, it has been conventionally difficult to realize a highly secured, unitary, and comprehensive management of the apartment housing. For example, a network device in accessing the network is often required to enter a user ID and password, which is a combination of alphanumeric characters, so that the authentication may eliminate unauthorized person's access for the network security. Nevertheless, an unauthorized person may easily conceive this combination, because the resident usually uses his/her unforgettable information, such as a birthday, phone number, name, etc., for this combination.

In addition, due to the recent increased number of crimes of picking and stealing, enhanced housing security becomes important against intruders who attempt to steal money and valuables in an apartment. The above apartment houses often hire a janitor or administrator for comprehensive managements including the crime prevention as well as maintenance for the apartment house, but the crime prevention becomes insufficient, for example, because the janitor returns home at night. Additionally, it becomes difficult for the janitor to provide sufficient managements as the number of apartments increases in the apartment house, as described above. Thus, some residents inconveniently commit the housing security to an outside security company.

Accordingly, it is an exemplified object of the present invention to provide a management device, method, and system for providing a comprehensive security management including network environment and crime prevention in an apartment house, or the like.

In order to achieve the above objects, a management system of one aspect according to the present invention including a network and a managed area includes a managed device, which is located in the managed area, connectible to the network, and assigned network information that enables communications of the managed device in the network, a guard manager adapted to guard the managed area against an intrusion, and a management device that uses the network information of the managed device to manage the managed device and the guard manager. This management system enables the management device to manage the managed device and the guard manager, and thus provides a unitary and comprehensive management for the network environment and the admittance to the managed area. The network information is not so easily conceivable that it may enhance the security.

The network system may include a plurality of managed areas, and managed devices, and guard managers, one or more managed devices and each guard manager being located in each of the managed areas. This configuration is suitable for an apartment house, where the managed area is each apartment and a guard manager is provided to each apartment. Of course, one guard manager guards a closed space including all of these managed areas. In that case, the guard manager would be located at the entrance, lobby, and elevator in the apartment house.

The network information may include a communication parameter necessary for communications by the managed device in the network, *e.g*., an IP address, a subnet mask, a default gateway, a user ID and password, and a combination thereof, and device information that defines the managed device, *e.g*., a MAC address and a housing identifier.

The management system may further include an interconnecting device that connects the managed and management devices to the network, wherein the management device sets up the interconnecting device so that a different VLAN is assigned to each managed area based on the network information of the managed devices. According to this management system, the management device sets up the interconnecting device and logically divides the network based on the network information of the managed device, forming a plurality of groups which are not communicate with each other even in the same network. Thereby, the management device may maintain the security for each VLAN group in the network. The network information may include the VLAN (*i.e*., an identifier of VLAN).

Such an interconnecting device may execute a predetermined operation when the drive unit reads predetermined data from the information recordable medium. The predetermined operation may include, for example, a collection of predetermined information and a restriction of an access to the network. This trigger function of the interconnecting device is preferable to achieve the automatic process.

The guard manager may have a plurality of operational modes corresponding to security levels to guard the managed area, wherein the guard manager changes the operational mode when receiving the network information from a person who attempts to enter the managed area, and when receiving the network information from a person who attempts to exit the managed area. Thereby, the management system may increase the security level when the user is out of the managed area. Of course, the management system may increase the security level even when the user is in the managed area, such as an apartment, while the user is sleeping.

The management system may further include an entrance server that enables the managed device to access the network using the network information. The entrance server is effective, for example, when an intruder, *e*.*g*., a corporate spy, brings his notebook PC and intrudes into the managed area, *e*.*g*., an office room, because the entrance server does not permit his PC to access the network due to the wrong network information.

A person who attempts to enter the managed area uses an information recordable medium to input information in the guard manager, wherein the guard manager includes a drive unit adapted to read the information from the information recordable medium, and allows the person to enter the managed area when the information from the information recordable medium is the network information. This feature is preferable since the person does not have to memorize the network information while keeping the same security. The information recordable medium is, for example, an IC card.

The above management device of another aspect according to the present invention may include, for example, a storage part for storing the network information of the managed device, and a controller that uses the network information to control the managed device and the guard manager. The controller controls connection status and traffic of the managed device, wherein the guard manager controls admittance to the managed area using the network information, and the controller authenticates the network information for use with the guard manager. Either the controller or the guard manager may provide the authentication, but the controller preferably knows a result of authentication for security purposes. The controller may give an alarm to a user of the management device, when determining that there is no correspondence between the information sent from the guard manager and the network information stored in the storage part, and when the guard manager informs the controller of the intrusion upon the managed area. The controller may disconnect the managed device from the network, when the guard manager informs the management device that a user of the managed device is away from the managed area, so as to enhance the network security.

A guard manager of still another object according to the present invention connected to a management device that is connected to a network, the network being connectible to a managed device located in a managed area, the management device using network information to manage the managed device and the guard manager, the managed device being assigned the network information that enables communications of the managed device in the network, includes a reading part which reads an information recordable medium entered by a person who attempts to enter the managed area, a transmitter, connected to the management device, which transmits information read by the reading part to the management device, and a controller which permits the person to enter the managed area, when the management device allows to do so. Thus, the guard manager under control by the management device promotes the unitary management of the network environment and admittance into the managed room. The managed area has an entrance that opens and closes, and the guard manager guards the managed area by locking and unlocking the (closed) entrance. Thus, the entrance may open when the guard manager unlocks the entrance.

The guard manager includes a sensor that detects the intrusion upon the managed area, and the guard manager informs the management device of any intrusion upon the managed area. In response, the management device may give an alarm to its user, as described above.

According to still another aspect of the present invention, a method for managing a managed device located in a managed area and admittance into the managed area, the managed device being connectible to a network, and assigned network information that enables communications of the managed device in the network includes the steps of determining whether information entered from a person who attempts to enter the managed area is the network information, allowing the person to enter the managed area when the determining step determines that the information entered from the person is the network information, and managing status of the managed device in the network using the network information. This method is implemented as a program that enables a computer to execute this method. This method also achieves a highly secured, unitary and comprehensive management to the network environment and admittance to the managed area. Similar to the above aspect of the present invention, this method may also include the step of reading the information entered from the person through an information recordable medium.

Other objects and further features of the present invention will become readily apparent from the following description of preferred embodiments with reference to accompanying drawings.
FIG. 1 is a structural view of a management system of the present invention.
FIG. 2 is a structural view of a network built in an apartment house shown in FIG. 1.
FIG. 3 is a schematic block diagram of a management device shown in FIG. 1.
FIG. 4 is a view showing an exemplary management table stored in a storage part shown in FIG. 3.
FIG. 5 is a schematic block diagram of an interconnecting device shown in FIG. 1.
FIG. 6 is a schematic block diagram of a network device shown in FIG. 1.
FIG. 7 is a schematic block diagram of a guard manager shown in FIG. 1.
FIG. 8 is a flowchart showing a procedure of creating the management table.
FIG. 9 is a flowchart for explaining an initial setup operation of the management system shown in FIG. 1.
FIG. 10 is a flowchart for explaining a housing management operation by a guard manager when a resident is about to leave.
FIG. 11 is a flowchart for explaining management device's management operation over the guard manager when the resident is about to leave.
FIG. 12 is a flowchart for explaining a housing management operation by the guard manager while the resident is absent.
FIG. 13 is a flowchart for explaining management device's management operation over the guard manager while the resident is absent.
FIG. 14 is a flowchart for explaining a housing management operation by the guard manager when the resident returns home.
FIG. 15 is a flowchart for explaining management device's management operation over the guard manager when the resident returns home.

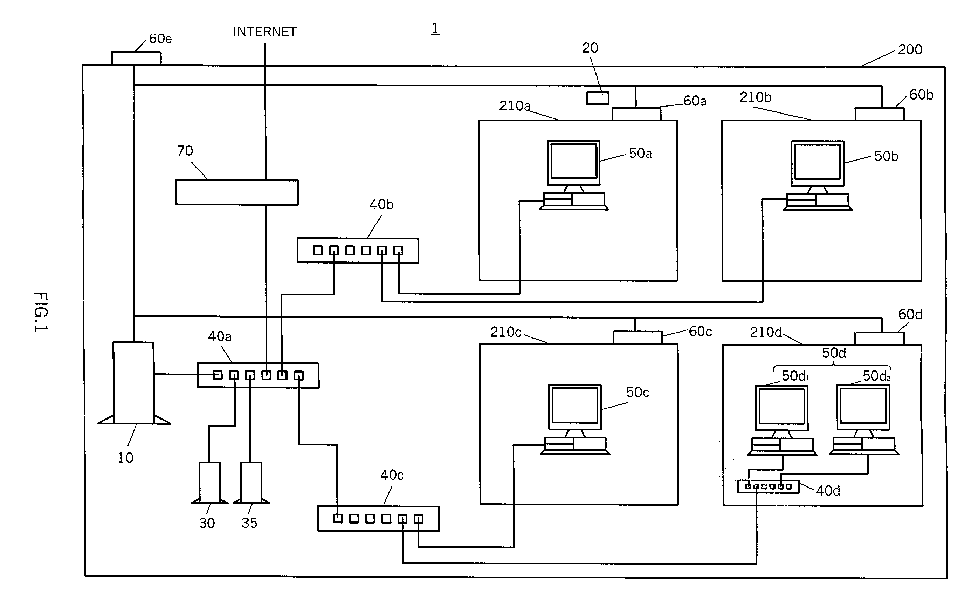

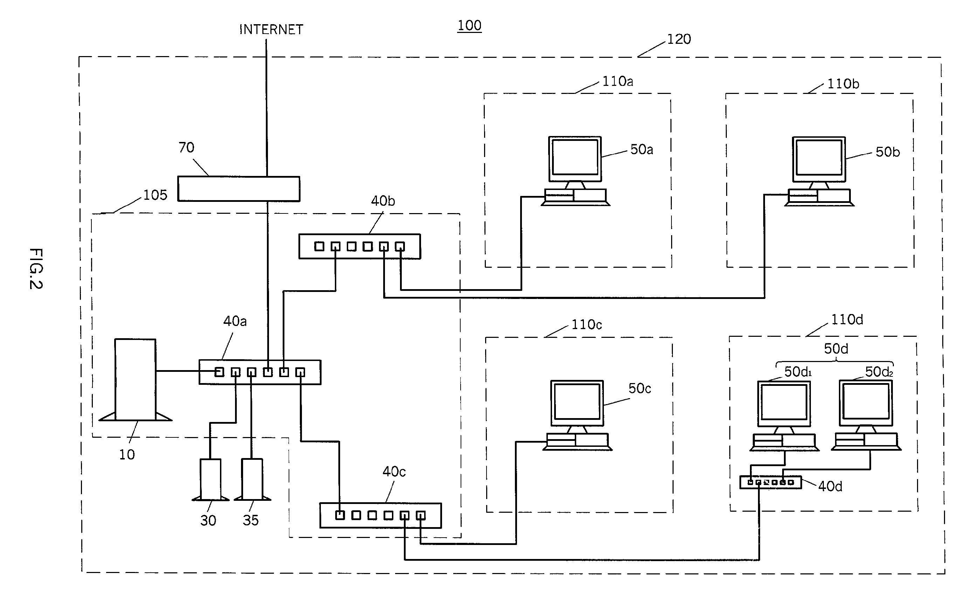

A description will now be given of a management system 1 of the present invention, with reference to the accompanied drawings. Here, FIG. 1 is a structural view of the management system 1. FIG. 2 is a structural illustration of the network 100 built in an apartment house 200. The inventive management system 1 includes a management device 10, an entrance server 30, a DHCP server 35, interconnecting devices 40, network devices 50, guard managers 60, and a router 70. In this disclosure, the interconnecting devices 40, network devices 50, guard managers 60, and apartments 210 respectively generalize interconnecting devices 40a-40d, network devices 50a-50d, guard managers 60a-60e, and apartments 210-210d, unless otherwise specified.

This embodiment applies the management system to an apartment house 200, which includes a plurality of managed areas, *i*.*e*., apartments 210a-210d. The apartment house 200 has several interconnecting devices 40 to build a network among these apartments 210. These apartments 210a-210d have the network devices 50a-50d connectible to the network 100. After a move in the apartment 210, the network device 50 becomes connectible to the network 100 by being connected to a terminal, such as a LAN connector, connected to the interconnecting device 40 in the apartment 210. A janitor or administrator ("administrator" hereinafter) of the apartment house 200 may provide each apartment 210 in advance with a network device 50 in accordance with resident's request.

The network 100 in the apartment house 200 is so adapted with these network devices 50a-50d that the network device 50a and 50b are connected to the interconnecting device 40b, the network devices 50c and 50d are connected to the interconnecting device 40c, and the interconnecting devices 40b and 40c are connected to the interconnecting device 40a. As seen in apartment 210d, the network 100 may form a subnet using a hub 40d and the network devices 50d, *i.e*., network devices 50d₁and 50d₂ (50d generalizes 50d₁and 50d₂ unless otherwise specified). The management device 10, entrance server 30, DHCP server 35, and router 70 are connected to the interconnecting device 40a. The management device 10, entrance server 30, DHCP server 35 are provided in a management room for managing the apartment house 200 for use with the administrator of the apartment house 200.

The guard managers 60a-60d are respectively provided for the apartments 210a-210d, and adapted to communicate with the management device 10. The guard manager 60 is provided, for example, outside the apartment 210 and near a door at the entrance of the apartment 210. As discussed later, this guard manager 60 is used when the resident is going out or returns home. In one embodiment, another guard manager 60 (although not shown in FIG. 1) is additionally provided inside of each apartment 210, so as to change the security level while the resident is at home, e.g., when the resident goes to bed.

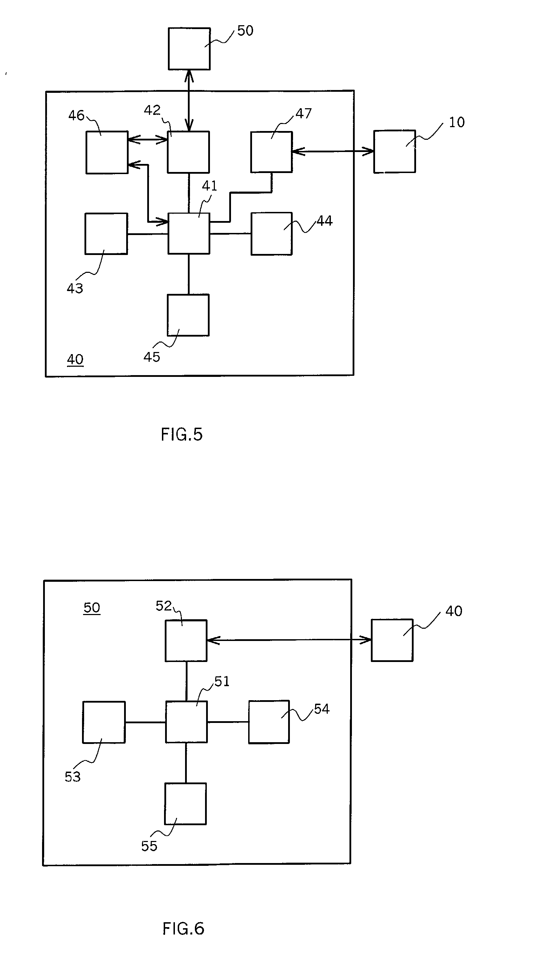

Although this embodiment uses a cable for connection between the guard manager 60 and the management device 10, it may use any type of data communication including radio and wire communications. Keys 212 and 214 are provided at its door and window in the apartment 210. The keys 212 and 214 are not shown in FIG. 1 but shown in FIG. 6, and implemented as an electronic key whose lock and unlock are controllable by an electric signal in this embodiment. These keys 212 and 214 are connected to the guard managers 60a-60d in the apartments 210a-210d.

The structures shown in FIGs. 1 and 2 are for illustrative purposes, and the present invention does not limit the number of apartments 210, and the number of network devices 50 in each apartment 210.

The management device 10 manages the guard managers 60 as well as the network 100. To be more specific, the management device 10 sets up the interconnecting devices 40 so that a different VLAN (Virtual Local Area Network) is assigned to each apartment 210 based on network information of the network device 50, such as a device identifier and a communication parameter. Moreover, the management device 10 verifies or authenticates information sent from the guard manager 60 including the network information, and manages the guard managers 60 in accordance with the information. Although the instant embodiment uses a device identifier, a communication parameter may be used.

The management device 10 also manages a connection status and traffic of each network device 50 through the interconnecting device 40, although this management is not described in detail. For example, the network device 10 obtains from the interconnecting device 40 the communication amount and/or communication time for each communication port 42 of the interconnecting device 40. Based on the obtained communication amount and/or communication time, the management device 10 may control communications of the communication port 42 and create billing information.

The management device 10 is constructed exemplarily as a desktop PC in this embodiment, which includes an external or internal IC card drive 18. A contact-type IC card 20 is used for the IC card drive 18, but the noncontact-type IC card is not excluded from the present invention. Further, the present invention is also applicable to information recordable media other than the IC card.

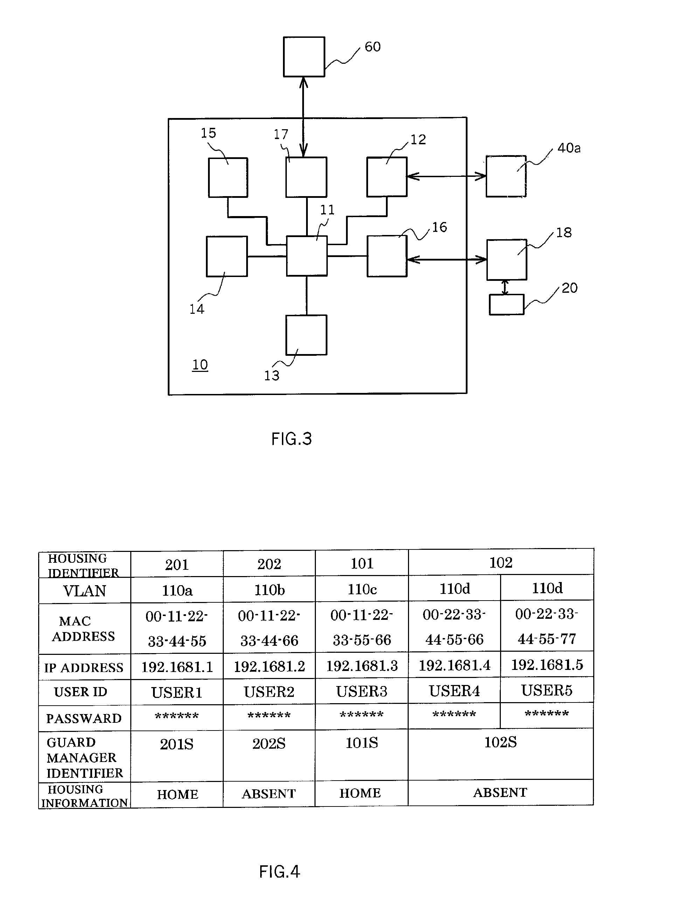

The management device 10 includes, as shown in FIG. 3, a controller 11, a communication port 12, a RAM 13, a ROM 14, a storage part 15, an interface 16, a transmitter/receiver 17, and the IC card drive 18. Here, FIG. 3 is a schematic block diagram of the management device 10. FIG. 3 does not show input/output devices (e.g., a keyboard, a mouse or other pointing devices, and an indication device, such as a display) provided with the management device 10. Through the input/output devices, an operator of the management device 10 may control the IC card drive 18, store various kinds of data in the storage part 15, and download necessary software into the RAM 13, ROM 14 or storage part 15. In addition, the management device 10 gives an alarm to the administrator through the output device, for example, when the guard manager 60 informs the management device 10 of any intrusion onto the apartment 210.

The controller 11 broadly covers processors such as a CPU and an MPU regardless of its name, and controls each module in the management device 10. If necessary, the management device 10 may be connected to a host (not shown), and the controller 11 may communicate with the host.

The controller 11 receives desired information from a network management table created by the entrance server 30, and creates a management table 15a. The controller 11 stores all or part of the management table 15a in the IC card 20 through the IC card drive 18. The controller 11 refers to the management table 15a, executes a management program stored in the storage part 15, and manages the guard managers 60.

As discussed above, if necessary, the controller 11 may give an alarm to the administrator (if necessary, and an outside security company or the police), when the guard manager 60 informs the management device 10 of any intrusion onto the apartment 210, when the controller 11 determines that the information sent from the guard manager 60 does not correspond to the stored network information, etc.

The controller 11 sets up the interconnecting device 40 via the communication port 12 so as to assign a different VLAN to each apartments 210 based on the network information of the network devices 50 in the management table 15a, as described later.

The controller 11 assigns the same VLAN 105 as that of the management device 10 to the interconnecting devices 40 in this embodiment. Therefore, the management device 10 may control the interconnecting devices 40 in the VLAN 105, and performs a VLAN configuration for the interconnecting devices 40. The controller 11 assigns VLANs 110a-1 10d, different from the VLAN 105, to the network devices 50a-50d in the apartments 210a-210d. Thereby, the management device 10 cannot access files in the network device 50 in each apartment 210. Conversely, the network devices 50 can neither access files in the network device 10 nor perform a VLAN configuration for the interconnecting devices 40. The network device 50 in one apartment 210 (*e.g*., the apartment 210a) cannot access files in the network device 50 of another apartment 210 (*e.g*., the apartment 210d). The controller 11 assigns a VLAN 120 to the entrance and DHCP servers 30 and 35. The VLAN 120 allows the entrance and DHCP servers 30 and 35 to communicate with the VLANs 105 and 110a-110d.

The communication port 12 may be an LAN adapter connected to the interconnecting devices 40, and a USB port or IEEE 1394 port for providing connections to the Internet (as necessary, via an Internet Service Provider (ISP)) via a modem, or a terminal adapter (TA) through the public telephone network, ISDN, or various types of dedicated lines. The RAM 13 temporarily stores data to be read from the ROM 14 and storage part 15, data to be written in the storage part 15, and the like. The ROM 14 stores various kinds of software and firmware required for operations of the controller 11, and other types of software.

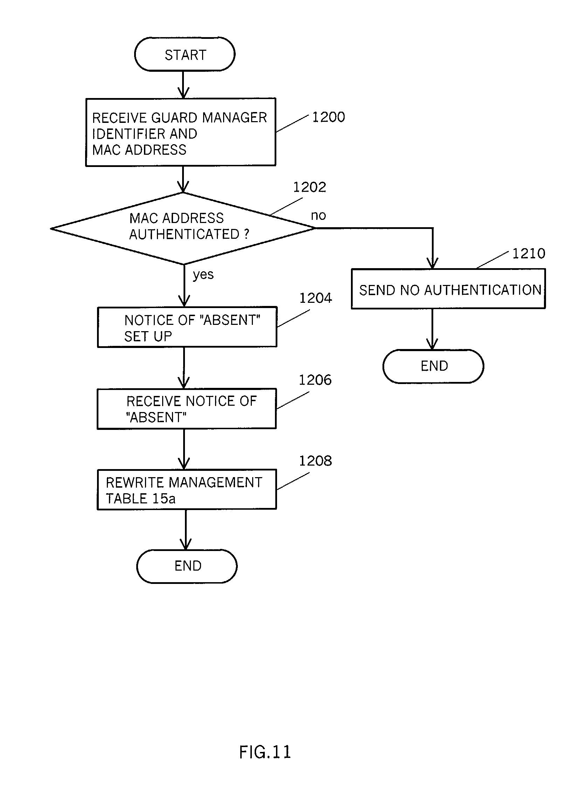

The storage part 15 stores a management program for managing the guard managers 60 shown in FIGs. 11, 13 and 15, which will be described later, as well as the management table 15a shown in FIG. 4. Here, FIG. 4 shows an exemplary management table 15a. The management program may be distributed as an independent commodity, stored in a CD-ROM or other recordable media to be sold, or distributed and updated online via a network, such as the Internet.

The management table 15a in this embodiment includes information necessary for guard managements. Such information includes, as shown in FIG. 4, network information of the network 50 including housing identifier, VLAN information, MAC address, IP address, user ID, and password. The management table 15a also stores an identifier of a guard manager 60 corresponding to the apartment 210 and a status of the apartment 210.

Optionally, the management table 15a may further include a status of the guard manager 60. Then, the guard manager 60 may change its status or operational mode corresponding to a security level even when the status of the apartment 210 does not change. For instance, the resident of the apartment 210 sometimes would like to enhance its security level while sleeping. In this case, two or three security levels are used. The high security level is used while the resident is away from the apartment 210. The high or intermediate security level is used while the resident is sleeping, etc. The low security level is used while the resident stays at the apartment 210 during his waking hours. It is understood that a change of a security level is sometimes effective for example, because a resident seldom opens a window while sleeping, although he/she frequently opens the window in the daytime.

The housing identifiers 101, 102, 201 and 202, respectively identify four apartments 210a-210d. The housing identifiers are apartment numbers in the apartment house 200 in this embodiment, but may use any number and symbol, such as consecutive or non-consecutive arbitrary numerals as long as they may identify the apartment 210 in the apartment house 200.

The VLAN information is the same that assigned by the management device 10. The MAC (Media Access Control) address is to identify an information device connected to a LAN.

The IP (Internet Protocol) address is a period separated four-block address, each block ranging 0-255 in decimal notation, assigned to a computer connected to the TCP/IP network circumstance. The IP address is included in an IP header provided by the IP protocol in the network layer in the TCP/IP protocol. The IP address of a computer directly connected to the Internet is obtained from the NIC (Network Information Center). Alternatively, the IP address is replaced with a DNS (Domain Name System) address.

The user ID and password are identifiers for identifying network device 50's user who attempts to login the network 100.

The guard manager identifier is an identifier of the guard manager 60 provided in the apartment 210. The housing information indicates the status of the apartment 210 by "home" or "absent".

The administrator or controller 11 stores the housing identifier, VLAN, and guard manager identifier, while the controller 11 stores the MAC address, IP address, user ID, and password by receiving them from the entrance server 30, as described later. The administrator records the housing information as "absent" (prior to resident's moving in the apartment 210), and the controller 11 changes it between "home" and "absent", as described in detail later.

The interface 16 is, for example, a USB port or a parallel port, and connects the management device 10 to an external device, e.g., the IC card drive 18 in this embodiment. The interface 16 includes any interface irrespective of a type of data transmission method, such as parallel and serial systems, and a type a connection medium, such as a radio and wire transmissions.

The transmitter/receiver 17 connects the management device 10 to the guard managers 60 to establish communications between them. Although this embodiment indicates the interface 16 and the transmitter/receiver 17 as independent members, the interface 16 may serve as part of the transmitter/receiver 17. The transmitter/receiver 17 includes any interface irrespective of a type of data transmission method, such as parallel and serial systems, and a type a connection medium, such as a radio and wire transmissions.

The IC card drive 18 writes data into and reads data from the IC card 20. The IC card drive 18 records part of management table 15a including the MAC address, which is output by the controller 11 through the interface 16, into the IC card 20 in this embodiment. As described above, the present invention is not limited to use of an IC card. Therefore, an appropriate drive may be used depending upon a type of an information recordable medium. The IC card drive 18 may use any technology known in the art or be manufactured by those skilled in the art, and a detailed description thereof will be omitted.

The IC card 20 serves as a key to enter the apartment 210 in this embodiment. The IC card 20 generalizes a smart card, an intelligent card, a chip-in card, a microcircuit (or microcomputer) card, a memory card, a super card, a multifunctional card, a combination card, etc. The IC card of the present invention is not limited to a card-shaped medium, but may include any shape, such as a stamp size and smaller ultra-micro and coin shapes.

The entrance server 30 permits a login the network by the network device 50 having a predetermined MAC address. The entrance server 30 includes a controller, a communication port, a RAM, a ROM, and a storage part, which are not illustrated. The entrance server is effective especially when the present invention is applied to the office building. Suppose that an intruder, e.g., a corporate spy brings his notebook PC and intrudes into an office room. The entrance server does not permit his PC to access the network due to the wrong MAC address.

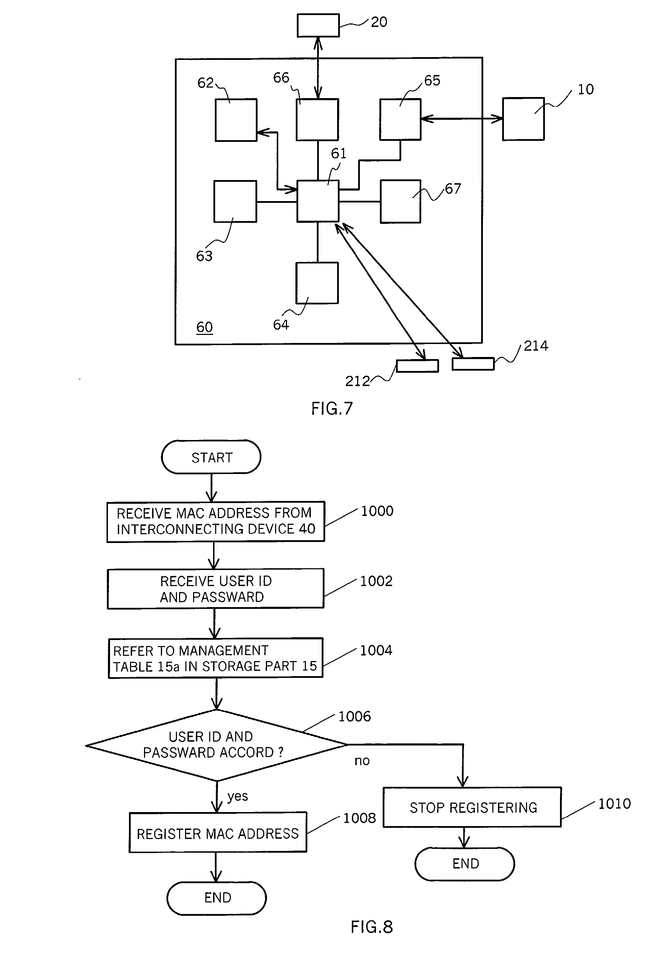

The controller uses a program shown in FIG. 8 to build a network management table. The controller refers to the management table, and permits the network device 50 having a predetermined MAC address to login the network 100.

The communication port may be an LAN adapter connected to the interconnecting devices 40, and a USB port or IEEE 1394 port for providing connections to the Internet (as necessary, via an Internet Service Provider (ISP)) via a modem, or a terminal adapter (TA) through the public telephone network, ISDN, or various types of dedicated lines.

The RAM temporarily stores data to be read from the ROM and storage part, data to be written in the storage part, and the like. The ROM stores various kinds of software and firmware required for operations of the controller, and other types of software.

The storage part stores a management-table creating program for creating the network management table, and the resultant network management table. The network management table in this embodiment stores, where five network devices 50 are connected to the network and its subnet(s), a relationship between the apartments 210 and communication parameters and device information of the corresponding network 50.

The communication parameters in this embodiment include an IP address assigned by the DHCP server 35, and a user ID and password, but may further include a subnet mask and a default gateway. The entrance server 30 obtains and stores these pieces of information from users of the network devices 50 offline, *i.e*., via telephone, facsimile, mail before creating the network management table.

The subnet mask is a bit pattern for separating the host address part in the IP address into subnet and host addresses. When "255.255.255.0" is defined by the subnet mask, the first three numbers are represented in binary notation as "11111111". "1" denotes the same network in the subnet mask.

The default gateway is an IP gateway through which a host transmits an IP datagram, except when the host for transmitting the IP datagram incorporates a routing table including a destination IP address and when the destination IP address has the same network address as the transmitting host.

The communication parameters are not limited to the above, but may include a DNS (Domain Name System) address and a router address.

The typical device information of the network device 50 is an MAC address, but may include a housing identifier, and hardware and firmware versions. The housing identifier is an identifier for a housing of the network device 50. The hardware and firmware versions are, respectively, hardware and firmware versions of the network device 50.

The DHCP server 35 assigns communication parameters, *e.g.,* the IP address, subnet mask, default gateway, to a plurality of network devices 50. The DHCP server 35 may use any technology known in the art, and a description thereof will be omitted.

The interconnecting device 40 connects the network device 50 to the network 100, and includes one or more interconnecting ports to be connected to the network device 50. The interconnecting device 40 includes, for example, a hub, a switch, a router, any other concentrator, a repeater, a bridge, a gateway device, a PC, and a wireless interconnecting device (e.g., an access point as a interconnecting device for wireless LAN).

The interconnecting device 40 includes, as shown in FIG. 5, a controller 41, an interconnecting port 42, a RAM 43, a ROM 44, a storage part 45, a detector 46, and a communication port 47. Here, FIG. 5 is a schematic block diagram of the interconnecting device 40. FIG. 5 also omits the input/output devices provided with the interconnecting device 40 for simplicity purposes. Through the input device, an operator of the interconnecting device 40 may input various kinds of data in the storage 45, and download necessary software into the RAM 43, and ROM 44 and storage part 45.

The controller 41 broadly covers processors including a CPU and a MPU, regardless of its name, controls each module in the interconnecting device 40. The controller 41, in conjunction with the present invention, communicates with the detector 46, provides information for identifying the network device 50 to the entrance server 30, and manages interconnecting ports 42 to assign a different VLAN to each apartment 210 based on the MAC address of the network device 50 to be connected to the interconnecting device 40.

The controller 41 may execute a predetermined operation in accordance with information which the guard manager 60 sends to the management device 10. The predetermined operation may include, for example, a collection of predetermined information in the Internet and a restriction of an access to the network. This trigger function of the interconnecting device 40 is preferable to achieve the automatic process. For example, a parent who is going out, may request the management device 10 through the guard manager to control the controller 41 so as to restrict his/her child's Internet access to educational homepages.

The interconnecting port 42 is a communication port to be connected to each network device 50 by a cable or the like. Specifically, the interconnecting devices 40b and 40c are connected to the interconnecting ports 42 in the network device 40a. The network devices 50a and 50b are connected to the interconnecting ports 42 in the interconnecting device 40b, while the network devices 50c and 50d (*i.e*., 50d₁ and 50d₂ via the interconnecting ports in the hub 40d) are connected to the interconnecting ports 42 in the interconnecting device 40c.

The RAM 43 temporarily stores data to be read from the ROM 44 and storage part 45, data to be written in the storage part 45, and the like. The ROM 44 serves to store various kinds of software and firmware necessary for operations of the controller 41, and other types of software. The storage part 45 stores a program for managing the interconnecting ports 42.

The detector 46 detects power-on of the network device 50 by communicating with the interconnecting port 42, and notifies the controller 41 of the detection result. Since the detector 46 uses any structure known in the art, for example, compares the voltage of the interconnecting port 42 with a specific slice level for detection purposes, a detailed description of the detector 46 will be omitted.

The communication port 47 may be an LAN adapter, and a USB port or IEEE 1394 port for providing connections to the Internet (as necessary, via an Internet Service Provider (ISP)) via a modem, or a terminal adapter (TA) through the public telephone network, ISDN, or various types of dedicated lines. The interconnecting device 40 communicates with the management device 10 through the communication port 47.

The network device 50 is a device managed by the management device 10, and includes a network device, such as a hub, a switch, a router, any other concentrator, a repeater, a bridge, a gateway device, a PC, a server, a wireless interconnecting device (e.g., an access point as a interconnecting device for wireless LAN), and a game machine having a communication function.

The network device 50 includes, as shown in FIG. 6, a controller 51, a communication port 52, a RAM 53, a ROM 54, a storage part 55, an interface 56, a power-supply controller 57, and an IC card drive 60. Here, FIG. 6 is a schematic block diagram of the network device 50. FIG. 6 also omits the input/output devices provided with the network device 50 for simplicity purposes. Through the input device, an operator of the network device 50 may input various kinds of data in the storage part 55, and download necessary software into the RAM 53, and ROM 54 and storage part 55.

The controller 51 covers a broad range of processors such as a CPU or an MPU regardless of its name, and controls each module in the network device 50. The communication port 52 may be an LAN adapter for establishing a connection to the network, and a USB port or IEEE 1394 port for providing connection to the Internet (as necessary, via an Internet Service Provider (ISP)) via a modem, or a terminal adapter (TA) through the public telephone network, ISDN, or various types of dedicated lines. The communication port 52 is an interface to be connected to the interconnecting port 42 in the interconnecting device 40 in this embodiment. The RAM 53 temporarily stores data to be read from the ROM 54 and storage part 55, data to be written in the storage part 55, and the like. The ROM 54 stores various kinds of software and firmware necessary for operations of the controller 51, and other types of software. The storage part 55 stores a communication parameter and a configuration program. The configuration program is a program to receive communication parameters from the DHCP server 35 and to set up them.

Each guard manager 60 guards the apartment house 200 or the corresponding apartment 210. The guard manager 60 includes, as shown in FIG. 7, a controller 61, a RAM 62, a ROM 63, a storage part 64, an interface 65, an IC card reader 66, and a guard part 67. Here, FIG. 7 is a schematic block diagram of the guard manager 60. The guard manager 60 may include input/output devices (e.g., a keyboard, a ten key, and a display) (not shown). Through the input device, an operator (or resident) of the guard manager 60 may input data necessary for the guard manager 60 or management device 10. For example, when a resident goes shopping leaving her child in the apartment 210, the resident uses the IC card 20 to enter information indicating that she is going shopping and uses the input device (not shown) to enter information indicating that someone is left in the apartment 210 so that the child may not be regarded as an intruder. The output device of the guard manager 60 may include a warning device, such as a speaker to issue a warning to an intruder and a warning light.

The controller 61 broadly covers processors including a CPU and a MPU, regardless of its name, controls each module in the guard manager 60. The controller 61 executes the management program stored in the storage part 64, and guards the apartment 210 together with the management device 10 against an intrusion. The controller 61 reads a device identifier or information including it stored in the IC card 20 using the IC card reader 66, and controls locking and unlocking of keys 212 and 214 provided at apartment's door and window.

The RAM 62 temporarily stores data to be read from the ROM 63 and storage part 64, data to be written in the storage part 64, and the like. The ROM 63 serves to store various kinds of software and firmware necessary for operations of the controller 61, and other types of software.

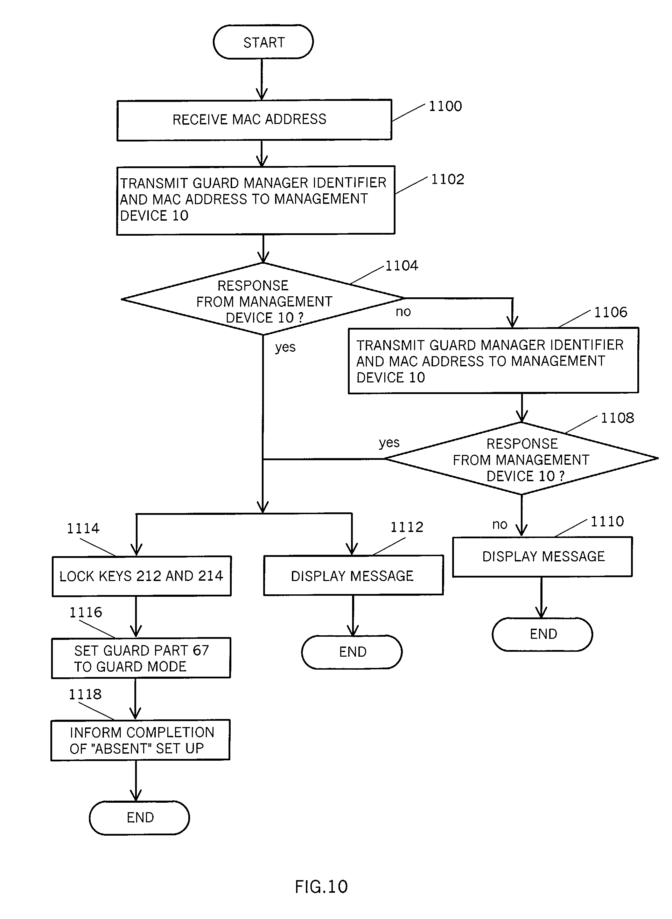

The storage part 64 stores the guard manager identifiers and the management program for the apartments 210. The management program is a program that controls admittance into the apartment 210, which will be described later with reference to FIGs. 10, 12 and 14. The management program may be distributed as an independent commodity, thus stored in a CD-ROM and another recordable medium, sold, and distributed and updated online via a network, such as the Internet.

The interface 65 is, for example, a USB port or a parallel port, and connects the guard manager 60 to the management device 10. The interface 65 includes any interface irrespective of a type of data transmission method, such as parallel and serial systems, and a type a connection medium, such as a radio and wire transmissions.

The IC card reader 66 reads information stored in the IC card 66. Although the IC card reader 66 can only read the information from the IC card 20 in this embodiment, it may be implemented as a reader/writer that may serve as a recorder. Such a reader/writer, when replaced with the IC card reader 66, may write IC card 20's use history (such as date/time and the number of reads) onto the IC card 20. The IC card reader 66 may use any technology known in the art, and a description thereof will be omitted.

The guard part 67 monitors an intrusion into the apartment house 200 or apartment 210. For example, the guard part 67 guards an intruder who attempts to enter the apartment 210, while the resident is absent, by breaking the window or door, or by unlocking the keys 212 or 214 there. The guard part 67 in this embodiment may use an infrared sensor, a vibration sensor, a sound sensor, and a guard sensor combining two or more of these sensors, and is provided at the window, the door, and the like. In one embodiment, the guard part 67 includes a digital camera or video to photographing an intruder. The still or motion picture data is sent to the management device 10 for security purposes. The guard part 67 has guard and non-guard modes, switched by the controller 61 or the resident of the apartment 210. In one embodiment, there are several guard modes having different security levels.

In this embodiment, the guard mode is set when the infrared, vibration, and/or sound sensors turn on. For example, the infrared sensor is comprised of a pair of infrared light emitting and receiving elements, and provided on a door, a window, and the like along an intrusion path upon the apartment 210. The infrared sensor detects an interruption of the infrared light from the infrared light emitting element toward the infrared light receiving element. The vibration sensor, provided on a floor in the apartment 210, detects vibrations of the floor. The sound sensor, provided in the inside of the apartment 210, detects sounds larger than normal living sounds, such as a crash of window glass. The guard part 67 is connected to the controller 61, and thus the controller 61 may monitor the status of the sensor. The non-guard mode is set when the infrared, vibration, and/or sound sensors turn off.

The guard part 67 may further include a gas leakage detector, a temperature sensor, etc. to detect an accident, such as the escape of gas and fire.

A description will now be given of an operation of the inventive management system 1. At first, the management device 10 does not know the device information of the network device 50, and the administrator needs to obtain it and create the management table 15a. This action preferably follows, for example, resident's moving in the apartment house 200. It is not necessary to perform an operation shown in FIG. 8, which will be described later, for those residents who have no network device 50. However, as described in the operations below, it is necessary to store network information in the IC card 20 to activate the guard manager 60. Accordingly, the administrator provides such residents with unique device information without lowering the network security, because the residents cannot login the network 100 until they acquire a network device 50.

Referring to FIG. 8, the entrance server 30 creates the network management table for managing the network devices 50 which constitute the network 100. Here, FIG. 8 is a flowchart showing a procedure of creating the network management table. Preferably, the network management table is created in the presence of the administrator to prevent residents' dishonest act.

First, the resident connects the network device 50 to the network 100, and a controller of the network server 30 receives a MAC address of the network device 50 connected to the interconnecting device 40 from the interconnecting device 40 (step 1000). Then, the controller 11 receives a user ID and password entered by the resident through the network device 50, from the network device 50 that has login the entrance server 30 (step 1002). Then, the controller refers to the network management table in the storage part (step 1004), and determines whether the received user ID and password accord with those in the network management table (step 1006). If no authentication is reached in step 1006, then the controller stops the registration of the MAC address (step 1010). If an authentication has been reached in step 1006, the controller allows a registration of the MAC address in the network management table (step 1008). Simultaneously the entrance server 30 may allow the DHCP server 35 to set up the communication parameters including the IP address.

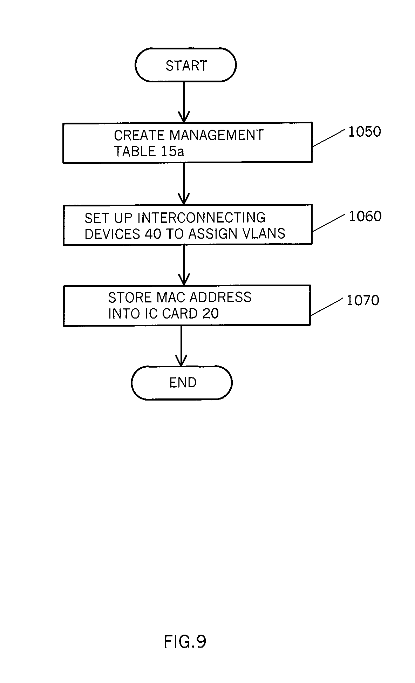

The management device 10 then creates the management table 15a as shown in FIG. 9 (step 1050). Here, FIG. 9 is a flowchart of the initial setup operation of the management system 1. The controller 11 requests the entrance server 30 to provide desired information among the network management table. In response, the entrance server 30 sends the desired information to the management device 10. The desired information includes, as discussed above, the MAC address, IP address, user ID and password in this embodiment.

The controller 11 sets up the interconnecting device 40 so as to assign a different VLAN to each apartments 210 based on the MAC address stored in the management table 15a (step 1060). The management device 10 stores the MAC address (or the MAC address and other information) in the IC card 20 using the IC card drive 18 (step 1070). The initial setup operations are wound up with these steps 1050-1070. The initial setup operations may include the network management table creating operation by the entrance server 30.

A description will be given of the management operation of the network 100 in the management system 1. Entrance server 30's controller receives a notice from the interconnecting device 40 through the communication port of turning-on of the network device 50 connected to the interconnecting device 40. The entrance server 30's controller then receives the MAC address of the network device 50 from the interconnecting device 40. The entrance server 30's controller refers to the network management table in the storage part, and determines whether the received MAC address has already been stored.

When the received MAC address has already been stored in the network management table, the entrance server 30's controller allows the DHCP server 35 to assign the communication parameters including the IP address to the network device 50 with the received MAC address. Then, the entrance server 30's controller records the communication parameters including the IP address in the network management table, and allows the interconnecting device 40 to communicate using its interconnecting port 42 connected to the network device 50 with the received MAC address. Thereby, the network device 50 may access the Internet through the router 70 and any other network device in the same VLAN. As described above, the management device 10 manages structure, performance, security, and billing of the network 100 by managing the connection and traffic statuses of the network device 50 through the interconnecting device 40.

When the received MAC address has not yet been stored in the network management table, the entrance server 30's controller prohibits the DHCP server 35 from assigning the communication parameters including the IP address to the network device 50 with the received MAC address. The entrance server 30's controller also prohibits the interconnecting device 40 from communicating using its interconnecting port 42 connected to the network device 50 with the received MAC address. The entrance server 30's controller may notify the management device 10 of the unauthorized access to the network 100 by the network device 50 and in response, the controller 11 may give an alarm to the administrator.

The entrance server 30 using such a step permits the network device 50 with the predetermined MAC address to access the network 100, and prohibits an unauthorized network device to access the network 100. The user ID and password are used in the initial setup, and need not, but may, be entered whenever the user attempts to access the network 100. Although the conventional authentication system using a user ID and password may unintentionally give an intruder an opportunity to steal the user ID and password, the instant management system easily eliminates such an intruder because he/she can easily obtain neither the MAC address of the network device 50 nor even the fact that the MAC address is used for authentication.

The administrator may store in the IC card 20 the communication parameter including the IP address recorded in the management table 15a, when the resident uses the network device 50 that has succeeded a communication at least once.

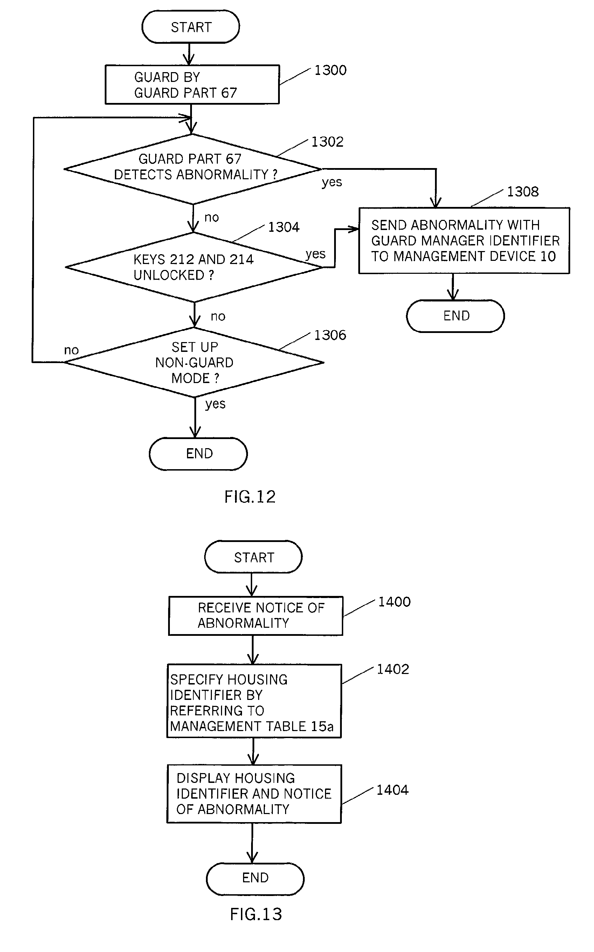

A description will now be given of the management operation of the apartment 210 in the management system 1, with reference to FIGs. 10-15. Here, FIG. 10 is a flowchart for explaining how the guard manager 60 guards the apartment 210 when a resident is about to leave. FIG. 11 is a flowchart for explaining how the management device 10 manages the guard manager 60 when the resident is about to leave. FIG. 12 is a flowchart for explaining how the guard manager 60 guards the apartment 210 while the resident is absent. FIG. 13 is a flowchart for explaining how the management device 10 manages the guard manager 60 while the resident is absent.

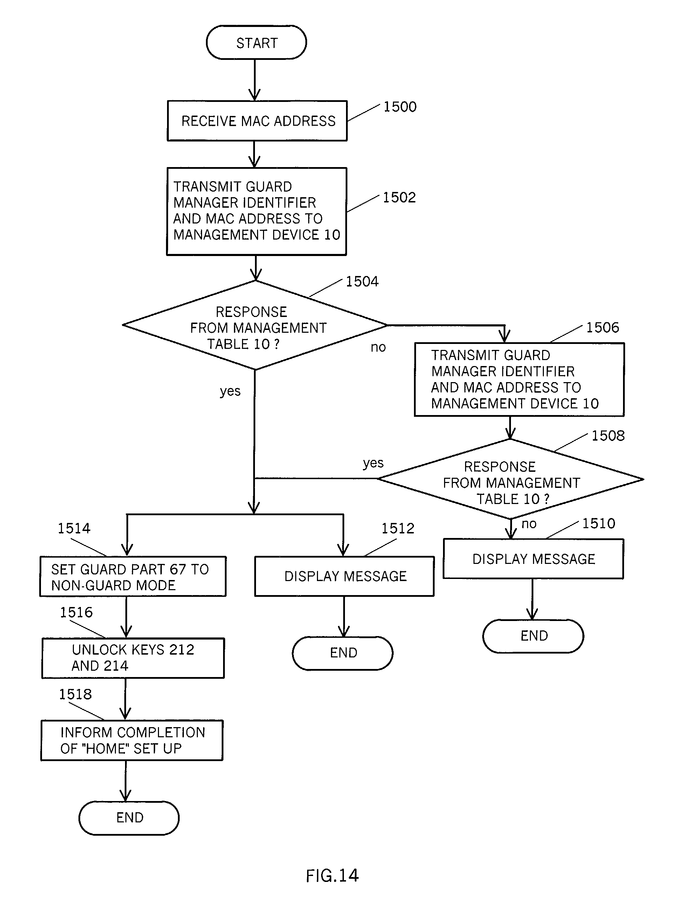

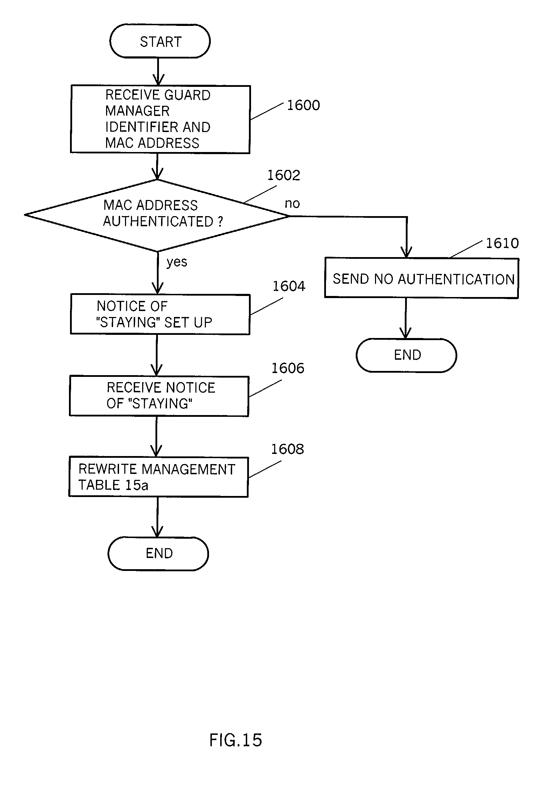

FIG. 14 is a flowchart for explaining how the guard manager 60 manages the apartment 210 when a resident returns home. FIG. 15 is a flowchart for explaining how the management device manages the guard manager 60 when a resident returns home. Although the following description describes the management method using the MAC address among information stored in the IC card 20, other network information, such as the IP address, housing identifier, another communication parameter, VLAN, and an arbitrary combination thereof will be used instead of the MAC address.

Initially, a resident of the apartment 210 receives the IC card 20 from the administrator. The IC card 20 stores the MAC address of the network device 50 located in the corresponding apartment 210 as a result of the initial setup operation. Where the apartment 210 is furnished with the network device 50, the resident may receive the IC card 20 from the administrator on or before moving in the apartment 210. Where the apartment 210 is not furnished with the network device 50, the resident purchases and connects a network device shortly after moving in the apartment 210. With this connection, the administrator executes the above initial setup operation, and the resident receives the IC card 20. The resident who has moved in but will not buy the network device 50 soon, the administrator makes up an arbitrary MAC address and stores it in the management table 15a and IC card 20, so as to activate the guard manager 60. Since the resident does not attempt to access the network 100, even the arbitrary MAC address does not lower the security in the network 100. In this embodiment, the resident uses the IC card 20 as a unique key to lock and unlock the keys 212 and 214. In an alternative embodiment, the resident uses the IC card 20 to change the security level or the operational mode of the guard manager 60, or to make the interconnecting device 40 execute the predetermined program.

When the resident goes out of the apartment 210, he/she inserts the IC card 20 into the IC card reader 66 in the guard manager 60. Then, the controller 61 of the guard manager 60 receives the MAC address stored in the IC card 20 read by the IC card reader 66 (step 1100), and sends the MAC address with its identifier to the management device 10 through the interface 65 (step 1102). Then, the controller 61 determines whether there is any answer from the management device 10 (step 1104). The step 1104 may set a predetermined time after the transmission in step 1102, so as to determine the presence of the response.

If the management device 10 does not respond in step 1104, e.g., within a predetermined time period, the controller 61 transmits again the guard manager identifier and the MAC address (step 1106), and determines whether there is a response from it (step 1108) like the step 1104. If no response is found in step 1108, the controller 61 indicates a message, such as "no answer, contact administrator", on the display (not shown) of the guard manager 60 (step 1110). Such a message helps a confirmation of whether there is a communication with the management device 10. As described later, it is important for the guard manager 60 to communicate with the management device 10, and a confirmation of the connection status may contribute to find any communication trouble including a cable disconnection. In addition, a plurality of steps for confirming the communication with the management device 10 may distinguish the temporary and complete interruptions of communications with each other. A typical temporary communicative interruption is, for example, a temporary interruption of radio waves where the guard manager 60 is connected with the management device 10 using the radio communication.

Referring now to FIG. 11, the transmitter/receiver 17 in the management device 10 receives the guard manager identifier and the MAC address sent in step 1102, and transfers them to the controller 11 (step 1200). The controller 11 refers to the management table 15a, specifies the housing identifier based on the guard manager identifier, and determines if it can authenticate the MAC address corresponding to the housing identifier (step 1202).

When the controller 11 determines that it cannot provide an authentication in step 1202 (for example, because the resident inserts a broken, different apartment's or different purpose-made IC card into the IC card reader 66), the controller 11 informs the guard manager 60 through the transmitter/receiver 17 that the information was not authenticated (step 1210).

When the controller determines that it can authenticate the information in step 1202, the controller 11 obtains the housing information of the apartment 210 corresponding to the MAC address, and confirms the current status of the apartment 210. The controller 11 informs the guard manager 60 through the transmitter/receiver 17 that it changes the housing status to "absent" from the current status (*i*.*e*., "home") of the apartment 210 (step 1204). Optionally, the controller 11 disconnects the network device 50 from the network through the corresponding interconnecting device 40, so as to enhance the network security.

In an alternative embodiment, the resident goes shopping leaving a child in the apartment 210. As described above, the resident may set different security levels for the same status of the apartment 210. Then, the resident may input additional information, for example, using the input device (not shown) in the guard manager 60. Of course, the resident may use input means of the IC card reader 66.

Referring back to FIG. 10, in response to yes in step 1104 or 1108, the controller 61 executes a predetermined procedure based on the received information through the interface 65. More specifically, when the controller 61 receives a notice that the MAC address was not authenticated, it indicates a message "no authentication" on a display (not shown) (step 1112). Such a message requires the resident to use a proper IC card and repeat the above procedure. When the resident used the proper IC card but received such a message, he/she will call or contact the administrator or take any necessary step.

When receiving a notice that the MAC address was authenticated and "absent" was set up, the controller 61 locks the keys 212 and 214 (step 1114), and sets up the guard part 67 into the guard mode (step 1116). Then, the controller 61 notifies the management device 10 that the "absent" set up has been completed for the apartment 210 (step 1118). After the step 1118, the controller 61 may indicate a message "lock and guard mode completed" on the display (not shown).

Referring to FIG. 11, the controller 11 in the management device 10 receives the message of completion of the "absent" setup through the transmitter/receiver 17 (step 1206), and rewrites the housing information to "absent" in the management table 15a.

Thereby, the lock of the apartment 210 is completed and the guard part 67 guards the apartment 210 against any intrusion, enhancing crime prevention effects in the management system 1.

Although the resident in the above steps locks the apartment 210 by having the IC card reader 66 read the IC card 20, any other lock action may be employed.

A description will be given of the operation while the resident of the apartment 210 is absent, with reference to FIGs. 12 and 13. While the resident is absent, the controller 61 in the guard manager 60 controls the guard part 67. To be more specific, the controller 61 monitors whether the guard part 67, as implemented by the infrared, vibration, and/or sound sensors or a guard sensor combining them, detects abnormality as a possible intrusion (step 1300). For example, where an intruder breaks the window glass into the apartment 210, the infrared sensor detects an interruption of the infrared light along the intrusion path. The vibration sensor detects floor's vibrations along with intruder's intrusion. The sound sensor detects a crash of the window.
When each of these sensors detects interruption, vibration and sound exceeding a predetermined level, it sends a predetermined alarm signal to the controller 61. In one embodiment, the guard part 67 take a photograph of the intruder using a digital camera, video, etc., and sends still or motion picture data to the controller 61.

The controller 61 monitors the keys 212 and 214. To be more specific, the controller 61 detects the abnormality if the keys 212 and 214 are unlocked during the guard mode.

The controller 61 informs, when receiving the signal (step 1302) or detecting that the key 212 or 214 is unlocked (step 1304), the management device 10 of its guard manager identifier and abnormality (step 1308). The controller 61 may inform the display (not shown) of the abnormality. The guard manager 60 may have an alarm or buzzer to give the alarm to the intruder.

The controller 11 in the management device 10 refers, when receiving the notice of abnormality from the guard manager 60 through the transmitter/receiver 17 (step 1400), to the management table 15a to identify the housing identifier based on the guard manager identifier (step 1402), and indicates on the display (not shown) the message of abnormality together with the number of the apartment 210 based on the housing identifier (step 1404). The administrator who has confirmed the message goes to ascertain the apartment 210 by himself/herself, or call the police or security company or take any other necessary step.

The controller 11 may give the alarm if the management device 10 has the alarm or buzzer so that the administrator may easily recognize the abnormality. The controller 11 may directly contact the security company through the Internet.

The controller 61 repeats the above procedures until the non-guard mode is set when the resident returns home, which will be described below.

A description will now be given of an operation when the resident returns home, with reference to FIGs. 14 and 15. The resident inserts the IC card 20 into the IC card reader 66 of the guard manager 60. Referring to FIG. 14, the controller 61 of the guard manager 60 receives the MAC address from the IC card 20 (step 1500). The controller 61 sends the identifier of the guard manager 60 and the MAC address to the management device 10 through the interface 65 (step 1502). The controller 61 determines whether there is a response from the management device 10 (step 1504).

If the management device 10 does not respond in step 1504, e.g., within a predetermined time period, the controller 61 transmits again the guard manager identifier and the MAC address (step 1506), and determines whether there is a response from the management device 10 (step 1508) like the step 1504. If no response is found in step 1508, the controller 61 indicates a message, such as "no answer, contact the administrator" on the display (not shown) of the guard manager 60 (step 1510). Such a message contributes to find a confirmation of whether there is a communication with the management device 10 (for the same reason as steps 1104-1110).

Referring to FIG. 15, the transmitter/receiver 17 in the management device 10 receives the guard manager identifier and the MAC address sent in step 1502, and transfers them to the controller 11 (step 1600). The controller 11 refers to the management table 15a, specifies the housing identifier based on the guard manager identifier, and authenticates the MAC address corresponding to the housing identifier (step 1602).

When the controller 11 determines that it cannot provide an authentication in step 1602 (for example, because the resident inserts a broken, different apartment's or different purpose-made IC card into the IC card reader 66), the controller 11 informs the guard manager 60 through the transmitter/receiver 17 that the information was not authenticated (step 1610).

When the controller determines that it can authenticate the information in step 1602, the controller 11 obtains the housing information of the apartment 210 corresponding to the MAC address, and confirms the current status of the apartment 210. The controller 11 informs the guard manager 60 through the transmitter/receiver 17 that it changes the housing status to "home" from the current status (*i.e*., "absent") of the apartment 210 (step 1604).

Referring back to FIG. 14, in response to yes in step 1504 or 1508, the controller 61 executes a predetermined procedure based on the received information through the interface 65. More specifically, when the controller 61 receives a notice that the MAC address was not authenticated, it indicates a message "no authentication" on the display (not shown) (step 1512). Such a message requires the resident to use the proper IC card and repeats the above procedure. When the resident used the proper IC card but received such a message, he/she may call or contact the administrator or take any necessary step. An intruder will give up the intrusion since keys 212 and 214 are not unlocked.

When receiving a notice that the MAC address was authenticated and "home" was set up, the controller 61 sets up the guard part 67 to the non-guard mode (step 1514) and unlocks the keys 212 and 214 (step 1516). Then, the controller 61 notifies the management device 10 that the "home" set up has been completed for the apartment 210 (step 1518). After the step 1518, the controller 61 may indicate a message "unlock and non-guard mode completed" on the display (not shown).

Referring to FIG. 15, the controller 11 of the management device 10 receives the message of completion of the "at home" setup through the transmitter/receiver 17 (step 1606), and changes the housing information to "absent" in the management table 15a.

Thereby, the keys 212 and 214 are unlocked completely and the guard mode is released. As shown in FIG. 1, the guard manager 60e is provided at the entrance or the like in the apartment 210 to restrict the admittance to the apartment 210. In this case, the controller 11 in the management device 10 allows the resident having the IC card 20 that stores any one of the MAC addresses stored in the management table 15a.

As discussed above, according to the management system 1 of the present invention, the management device 10 performs a unitary management of the network management for each network device 50 and admittance to the office 200. In addition, the management system 1 may assign different VLANs for respective network devices 50 based on their MAC addresses, maintaining the high level of security for the network 100. The IC card 20 performs the initial configuration for the network devices 50, improving the security in comparison with the conventional method. The network device 50 is not usable without the IC card 20 storing its MAC address. Thereby, the network device 50 is protected from unauthorized users.

Further, the present invention is not limited to the preferred embodiment, and various variations and modifications may be made without departing from the present invention. The management system of the present invention is applicable, for example, to an office building, school, etc.

According to the inventive management device, method and system, the management device manages, based on the network information of the network device, not only the network but also the guard managers for managing apartments. Thereby, the management device performs a unitary management for the network and apartments, and thus provides a comprehensive secured management for the apartment house including plural apartments. Therefore, this management system enhances the added and asset values of the apartment house.

## Claims

1. A management system including a network and a managed area, said management system comprising:
a managed device, which is located in the managed area, connectible to the network, and assigned network information that enables communications of the managed device in the network;
a guard manager adapted to guard the managed area against an intrusion; and
a management device that uses the network information of the managed device to manage said managed device and said guard manager.

2. A management system according to claim 1, wherein said network system includes a plurality of managed areas, and managed devices, and guard managers, one or more managed devices and each guard manager being located in each of the managed areas.

3. A management system according to claim 1, wherein said network system includes a plurality of managed areas and managed devices, one or more managed devices being located in each of the managed areas, said managed areas being provided in a closed space, and said guard manager guarding the closed space against an intrusion.

4. A management system according to claim 1, wherein the network information is a MAC address of the managed device.

5. A management system according to claim 1, wherein the network information is an IP address of the managed device.

6. A management system according to claim 1, wherein the network information includes a communication parameter necessary for communications by the managed device in the network, and device information that defines the managed device.

7. A management system according to claim 1, further comprising an interconnecting device which connects said managed and management devices to the network,
wherein said management device sets up said interconnecting device so that a different VLAN is assigned to each managed area based on the network information of said managed devices.

8. A management system according to claim 7, wherein the network information includes information of the VLAN.

9. A management system according to claim 1, wherein said guard manager has a plurality of operational modes corresponding to security levels to guard the managed area,
wherein said guard manager changes the operational mode when receiving the network information from a person who attempts to enter the managed area, and when receiving the network information from a person who attempts to exit the managed area.

10. A management system according to claim 1, further comprising an entrance server that enables said managed device to access the network using the network information.

11. A management system according to claim 1, further comprising an interconnecting device which connects said managed and management devices to the network, and executes a predetermined operation in accordance with information which said guard manager sends to said management device.

12. A management system according to claim 1, wherein a person who attempts to enter the managed area uses an information recordable medium to input information in said guard manager,
wherein said guard manager includes a drive unit adapted to read the information from the information recordable medium, and allows the person to enter the managed area when the information from the information recordable medium is the network information.

13. A management system according to claim 12, wherein the information recordable medium is an IC card.

14. A management device connected to a network that is connectible to a managed device located in a managed area, and said management device further connected to a guard manager adapted to guard the managed area against an intrusion, the managed device being assigned network information that enables communications of the managed device in the network, said management device comprising:
a storage part for storing the network information of the managed device; and
a controller which uses the network information to control the managed device and said guard manager.

15. A management device according to claim 14, wherein said controller controls connection status and traffic of the managed device,
wherein the guard manager controls admittance to the managed area using the network information, and said controller authenticates the network information for use with the guard manager.

16. A management device according to claim 14, wherein the guard manager sends information to said controller information to be authenticated which the guard manager has received from a person who attempts to enter the managed area,
wherein said controller provides an authentication to said guard manager when determining that the information sent from said guard manager corresponds to the network information stored in said storage part, and
wherein said guard manager allows the person to enter the managed area when receiving the authentication from said controller.

17. A management device according to claim 16, wherein said controller gives an alarm to a user of said management device when determining that the information sent from said guard manager does not correspond to the network information stored in said storage part.

18. A management device according to claim 14, wherein said controller gives an alarm to a user of said management device when the guard manager informs said controller of the intrusion upon the managed area.

19. A management device according to claim 14, wherein said controller disconnects said managed device from the network, when said guard manager informs said management device that a user of said managed device is away from the managed area.

20. A guard manager connected to a management device that is connected to a network, the network being connectible to a managed device located in a managed area, the management device using network information to manage the managed device and said guard manager, the managed device being assigned the network information that enables communications of the managed device in the network, and said guard manager guarding the managed area against an intrusion and comprising:
a reading part which reads an information recordable medium entered by a person who attempts to enter the managed area;
a transmitter, connected to the management device, which transmits information read by said reading part to the management device; and
a controller which permits the person to enter the managed area, when the management device allows to do so.

21. A guard manager according to claim 20, wherein the managed area has an entrance that opens and closes, and said guard manager guards the managed area by locking and unlocking the entrance.

22. A guard manager according to claim 20, wherein said guard manager includes a sensor that detects the intrusion upon the managed area, and said guard manager informs said management device of any intrusion upon the managed area.

23. A method for managing a managed device located in a managed area and admittance into the managed area, the managed device being connectible to a network, and assigned network information that enables communications of the managed device in the network, said method comprising the steps of:
determining whether information entered from a person who attempts to enter the managed area is the network information;
allowing the person to enter the managed area when said determining step determines that the information entered from the person is the network information; and
managing status of the managed device in the network using the network information.

24. A method according to claim 23, further comprising, prior to the determining step, the step of reading the information entered from the person through an information recordable medium.

25. A program that enables a computer to executes a method for managing a managed device located in a managed area and admittance into the managed area, the managed device being connectible to a network, and assigned network information that enables communications of the managed device in the network, said method comprising the steps of:
determining whether information entered from a person who attempts to enter the managed area is the network information;
allowing the person to enter the managed area when said determining step determines that the information entered from the person is the network information; and
managing status of the managed device in the network using the network information.
